# EUROPEAN PATENT APPLICATION

(11) **EP 2 660 441 A2**
(43) Date of publication of application: **06.11.2013**
(21) Application number: 13165917.9
(22) Date of filing: 30.04.2013
(51) Int. Cl.: F02C 7/04, F02C 7/141

(54) **Gas turbine air processing system**

(30) Priority: 01.05.2012 US 201213461376
(71) Applicant: General Electric Company, Schenectady, New York 12345 (US)
(72) Inventor: Hains, John Victor, Greenville, SC South Carolina 29615 (US); Gokhale, Prasad Nandkumar, Greenville, SC South Carolina 29615 (US); Singh, Harpal, Greenville, SC South Carolina 29615 (US)
(74) Representative: Cleary, Fidelma

(57) **Abstract**

Various systems for processing air are disclosed. In one embodiment, an air processing system (4) includes: an inlet manifold (5) adapted to receive compressor discharge air from multiple turbine compressors (2); an air processing system (4) fluidly connected with the inlet manifold (5), the air processing system (4) adapted to process the compressor discharge air to provide a processed working fluid; an outlet manifold (25) adapted to provide the processed working fluid to multiple turbine inlet (26) filtration system; and a control system (14) operably connected to the inlet manifold (5), the air processing system (4) and the outlet manifold (25), the control system (14) configured to control flow of the compressor discharge air from the multiple turbine compressors (2) to the inlet manifold (5).

## Description

The subject matter disclosed herein relates to systems for processing air. More particularly, aspects of the disclosure relate to systems for processing compressor discharge air in a turbine system.

Some turbo-machines, such as gas turbines, may generally include, in serial flow arrangement, an inlet system for receiving and channeling an ambient airstream; a compressor which receives and compresses that airstream, a combusting system that mixes a fuel and the compressed airstream, ignites the mixture, and allows for the gaseous by-product to flow to a turbine section; which transfers energy from the gaseous by-product to an output power. Other components of the gas turbine may be used therein.

Conventional gas turbine systems utilize sets of air processing devices for cleaning compressor discharge air. In these conventional systems, each gas turbine is connected to its own respective air processing device (also known as a "skid"). These single compressor/single skid configurations can cause reliability and control issues, and may also require excessive amounts of hardware.

Various systems for processing air are disclosed. In one embodiment, an air processing system includes: an inlet manifold adapted to receive compressor discharge air from a plurality of turbine compressors; an air processing system fluidly connected with the inlet manifold, the air processing system adapted to process the compressor discharge air to provide a processed working fluid; an outlet manifold adapted to provide the processed working fluid to a plurality of turbine inlet filtration systems; and a control system operably connected to the inlet manifold, the air processing system and the outlet manifold, the control system configured to control flow of the compressor discharge air from the plurality of turbine compressors to the inlet manifold.

A first aspect of the invention includes an air processing system having: an inlet manifold adapted to receive compressor discharge air from a plurality of turbine compressors; an air processing system fluidly connected with the inlet manifold, the air processing system adapted to process the compressor discharge air to provide a processed working fluid; an outlet manifold adapted to provide the processed working fluid to a plurality of turbine inlet filtration systems; and a control system operably connected to the inlet manifold, the air processing system and the outlet manifold, the control system configured to control flow of the compressor discharge air from the plurality of turbine compressors to the inlet manifold.

A second aspect of the invention includes an air processing system having: an inlet manifold having a plurality of ports adapted to receive compressor discharge air from a plurality of turbine compressors; an air processing system fluidly connected with the inlet manifold, the air processing system adapted to process the compressor discharge air to provide a processed working fluid; a temperature sensor operably connected to the air processing system, the temperature sensor adapted to determine a temperature of the processed working fluid; an outlet manifold adapted to provide the processed working fluid to a plurality of turbine inlet filtration systems; and a control system operably connected to the inlet manifold, the air processing system, the temperature sensor and the outlet manifold, the control system configured to control flow of the compressor discharge air from the plurality of turbine compressors to the inlet manifold based upon the determined temperature of the processed working fluid.

A third aspect of the invention includes a system having: a plurality of turbine compressors; and an air processing system operably connected to the plurality of turbine compressors, the air processing system including: an inlet manifold adapted to receive compressor discharge air from each of the plurality of turbine compressors; an air processing system fluidly connected with the inlet manifold, the air processing system adapted to process the compressor discharge air to provide a processed working fluid; an outlet manifold adapted to provide the processed working fluid to a plurality of turbine inlet filtration systems; and a control system operably connected to the inlet manifold, the air processing system and the outlet manifold, the control system configured to control flow of the compressor discharge air from the plurality of turbine compressors to the inlet manifold.

These and other features of this invention will be more readily understood from the following detailed description of the various aspects of the invention taken in conjunction with the accompanying drawings that depict various embodiments of the invention, in which:
FIG. 1 shows a schematic view of a system according to various embodiments of the invention.
FIG. 2 shows a schematic view of an environment according to various embodiments of the invention.

It is noted that the drawings of the invention are not to scale. The drawings are intended to depict only typical aspects of the invention, and therefore should not be considered as limiting the scope of the invention. In the drawings, like numbering represents like elements between the drawings.

Aspects of the invention disclosed herein relate to systems for processing compressor discharge air from a turbine compressor (e.g., a gas turbine compressor). More particularly, aspects of the invention disclosed herein relate to an air processing system having a skid which conditions compressor discharge air from multiple turbine compressors. The system can include an inlet control manifold which acts as a central intake for the compressor discharge air from the multiple turbine compressors.

As noted herein, in conventional turbine air processing systems, each gas turbine is connected to its own respective air processing device (also known as a "skid"). These single-skid/single-compressor configurations can cause reliability and control issues, and may also require excessive amounts of hardware.

In contrast to these conventional systems, various aspects of the invention include a turbine air processing system (or, skid) having an inlet manifold for receiving compressor discharge air from a plurality of turbine compressors (e.g., gas turbine compressors). In some more particular embodiments, the air processing system is configured to receive compressor discharge air from up to four (4) distinct turbine compressors via the inlet manifold.

In some particular embodiments, aspects of the invention include a system having: a plurality of turbine compressors and an air processing system operably connected to the plurality of turbine compressors. The air processing system can include: an inlet manifold adapted to receive compressor discharge air from each of the plurality of turbine compressors; an air processing system fluidly connected with the inlet manifold, the air processing system adapted to process the compressor discharge air to provide a processed working fluid; an outlet manifold adapted to provide the processed working fluid to a plurality of turbine combustors; and a control system operably connected to the inlet manifold, the air processing system and the outlet manifold, the control system configured to control flow of the compressor discharge air from the plurality of turbine compressors to the inlet manifold.

As is described further herein, the air processing system can process the incoming air by cooling the air, reducing its pressure and/or removing water and/or particulates in order to provide instrument-grade air for use, e.g., in the combustion process and/or gas turbine inlet filtration process. The air processing system's inlet manifold can include one or more control valves for controlling the inlet of compressor air from the plurality of gas turbine compressors to the processing components of the system. During operation, in some cases, one or more of the control valves may be closed to isolate operational turbines from those which are not in operation.

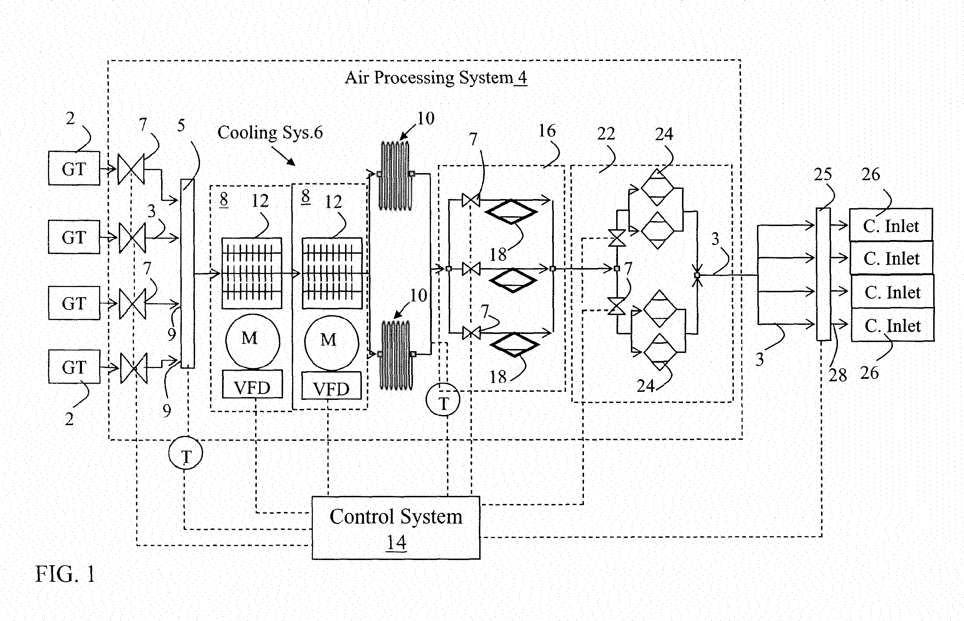

Turning to FIG. 1, a schematic view of a system is shown according to various embodiments of the invention. As shown herein, electronic connection of components shown herein are indicated by dashed lines, while fluid connections between components are indicated by solid lines having arrows (indicated as conduits 3).

The system can include a plurality of turbine compressors 2 (e.g., gas turbine, or GT compressors) and an air processing system 4 operably connected (e.g., fluidly, electrically and mechanically connected) with the turbine compressors 2. The air processing system 4 can further include an inlet manifold 5, which can include a plurality of ports 9 corresponding with each of the plurality of separate turbine compressors 2. Each of the plurality of ports 9 can be sized to admit the compressor discharge air from a corresponding turbine compressor 2. Admission of compressor discharge air from the turbine compressor(s) 2 can be controlled by one or more valves 7, which can be opened and/or closed by a control system 14, described further herein. The air processing system 4 can further include a cooling system 6, which can include one or more (e.g., two) forced air convection heat exchangers (HTEXs) 8 and one or more (e.g., two) natural convection heat exchangers (NATEXs) 10. Each HTEX 8 can include a tubing arrangement 12, a fan/motor (M) and a variable frequency drive (VFD). The tubing arrangement 12 is designed to carry the compressor discharge air (e.g., in a pattern designed to enhance heat exchange such as a serpentine pattern) through the cooling system 6, while the fan/motor (M) provides cooling fluid across the tubing arrangement 12 to cool the fluid. The fan/motor (M) can be driven by the VFD, which is controlled by the control system 14 in various embodiments. The control system 14 can be configured (e.g., designed and/or programmed) to modify the frequency of the VFD in order to modify the speed of the fan/motor (M). For example, the control system 14 can provide instructions to modify operating parameters of one or more HTEXs 8 via respective VFDs.

In various embodiments of the invention, the HTEXs 8 are arranged in series, where the compressor discharge air flows through separate HTEXs 8 successively. In various other embodiments of the invention, the HTEXs 8 can be arranged in parallel, where the compressor discharge air flows through separate HTEXs 8 substantially simultaneously.

The NATEXs 10 can include sets of conduits which carry the fluid along a path (e.g., in a serpentine shape) to provide natural convection cooling of the fluid. The NATEXs 10 can be arranged in parallel or in series. In some cases, the NATEXs 10 are located downstream in the cooling circuit from the HTEXs 8.

In various embodiments of the invention, the control system 14 can provide instructions to the VFDs to control speed of each fan/motor (M) for the purposes of modifying heat transfer across the tubing arrangements 12. In particular cases, the control system 14 provides instructions to modify the operating speed of the HTEXs according to the following parameters:
A) Initially, each HTEX 8 is set to a maximum speed (e.g., with fans set to approximately maximum revolutions per minute, or RPM), and the temperature of the fluid leaving the cooling system 6 is measured (e.g., using conventional temperature sensors (T) connected with the control system 14);
B) Where the temperature sensors (T) indicate a temperature of the fluid leaving the cooling system 6 is below a predetermined threshold after a period (e.g., one minute) has elapsed, the speed of one HTEX 8 is reduced by (e.g., approximately 33 percent);
C) Where the temperature sensors (T) indicate a temperature of the fluid leaving the cooling system 6 is below the predetermined threshold after a second additional period (e.g., one minute) has elapsed, the speed of the HTEX 8 is reduced further (e.g., by approximately 33 percent);
D) Where the temperature sensors (T) indicate a temperature of the fluid leaving the cooling system 6 is below the predetermined threshold after a third additional period (e.g., one minute) has elapsed, the speed of the HTEX 8 is reduced further (e.g., approximately 15-20 percent) such that it runs at a low rate (or, low RPM) (e.g., approximately 10-15 percent of its maximum speed);
E) Where the temperature sensors (T) indicate a temperature of the fluid leaving the cooling system 6 is still below the predetermined threshold after additional period(s) have elapsed, the speed of any additional HTEX 8 can be reduced, e.g., progressively, in a similar manner as the first HTEX 8.

It is understood that the above-described control scenario is only one of a number of processes which can be executed according to various embodiments of the invention. The figures used are not intended to limit the scope of the invention in any way, and are merely used for illustrative purposes.

Returning to FIG. 1, the air processing system 4 can further include a filter system 16 operably connected (e.g., via electrical, mechanical, electro/mechanical and/or wireless means) with the control system 14, which can include one or more coalescing filters 18 for removing water in the fluid after that fluid has passed through the cooling system 6. In some embodiments, a set of parallel coalescing filters 18 can be employed. In some cases, the control system 14 can initially direct all of the fluid through a first one of the coalescing filters 18 (e.g., by closing all but one control valve 7). The control system 14 can monitor a pressure drop (e.g., via conventional pressure sensors) across the coalescing filters 14, and open a second, parallel coalescing filter 18 via a control valve 7 in the case that the pressure drop is greater than a predetermined threshold. In the case that the pressure drop across the second, parallel coalescing filter 18 is greater than the predetermined threshold (or another predetermined threshold), the control system 14 can open a third, parallel coalescing filter 18 by opening an additional control valve 7.

The coalescing filters 18 inside the filter system 16 can also be cycled as to which coalescing filter 18 is in operation to allow for maintenance / repair of coalescing filter 18 elements while air processing system 4 is in operation.

The air processing system 4 can further include a drying system 22 including one or more dryers 24 for final moisture removal from the fluid after it passes through the drying system. The drying system 22 can be operably connected to the control system 14, which can control operation thereof. In some cases, the dryers 24 can be arranged in parallel, while in other cases, the dryers 24 are arranged in series. In some cases, the control system 14 can control the flow of fluid to one or more of the dryers 24 by actuating one or more control valves 7. The control system 14 and control valves 7 can be connected via any conventional mechanism known in the art or described herein, e.g., mechanically, electrically, electro-mechanically, hard-wired, wirelessly, etc.

The air processing system 4 can further include an outlet manifold 25, which can include a post-filter or other conventional filter for final filtering of the dried air (e.g., to ensure no transfer of drying substance from dryers 24). The outlet manifold 25 can include a plurality of outlet ports 28 corresponding to inlets (C. Inlet) of one or more inlets 26 of respective filtration systems. That is, the outlet manifold 25 can have an identical number of outlet ports 28 as the inlet manifold has inlet ports 26. The outlet manifold 25 can provide conditioned air to the inlets 26 of respective inlet filtration systems.

As noted herein, the control system 14 is configured to control operation of the air processing system 4 to provide conditioned compressor discharge air to a plurality of inlet filtration systems (inlets, 26). The control system 14 is configured (e.g., programmed) to control operation of one or more valves 7, drives (e.g., VFDs), etc. to condition the compressor discharge air received from the plurality of turbines (e.g., turbine compressors) 2 and provide that conditioned air for use, e.g., in a plurality of inlet filtration systems.

As will be appreciated by one skilled in the art, the control system 14 described herein may be embodied as a system(s), method(s) or computer program product(s), e.g., as part of a turbine monitoring system. Accordingly, embodiments of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, or device. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer (or controller) program code for carrying out operations of the present invention may be written in any programming language(s), for example, but not limited to, an object oriented programming language such as Java, Magik, Smalltalk, C++ or the like and conventional procedural programming languages, such as the "C" programming language, proprietary software, controller language, embedded or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Embodiments of the present invention are described herein with reference to data flow illustrations and/or block diagrams of methods, apparatus (systems) and computer program products according to embodiments of the invention. It will be understood that each block of the data flow illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

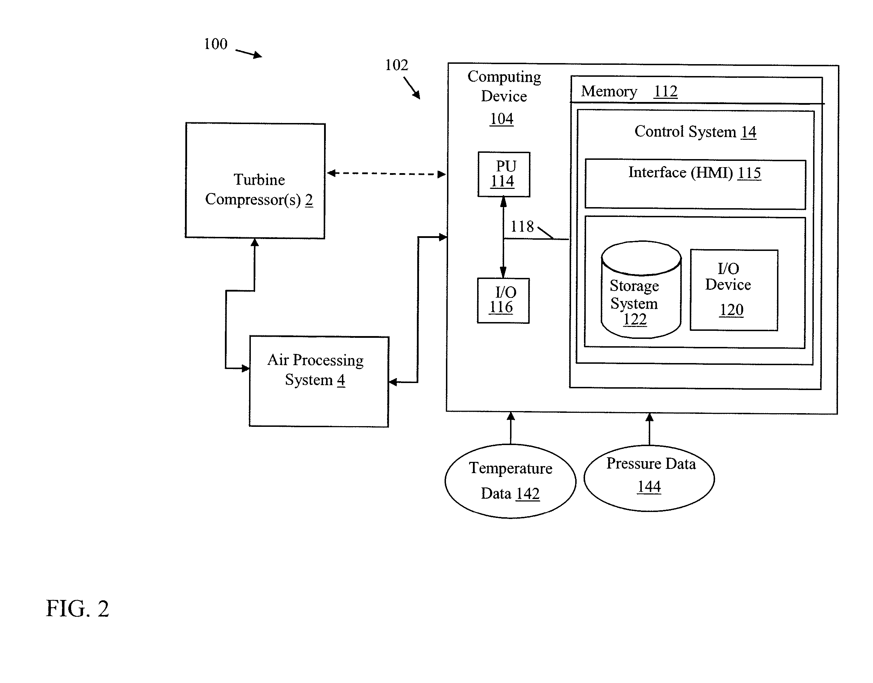

Turning to FIG. 2, an illustrative environment 100 including the control system 14 is shown according to embodiments of the invention. Environment 100 includes a computer infrastructure 102 that can perform the various processes described herein. In particular, computer infrastructure 102 is shown including a computing device 104 that comprises the control system 14, which enables computing device 104 to provide real-time control of the air processing system 4, by performing the processes of the disclosure. It is understood that the control system 14 can include an interface (e.g., a human machine interface (HMI)) 115 configured to execute some or all of the functions of the control system 14 described herein. The interface 115 can include one or more I/O devices 120 having one or more displays, actuatable buttons, touch screens, etc. for allowing a human operator to interact with the control system 14. In some cases, the interface 115 can include a standard industrial human-machine/man-machine interface (HMI/MMI) system which can act as an interface between human and machine, human and plant, machine and software etc.

Computing device 104 is shown including a memory 112, a processor (PU) 114, an input/output (I/O) interface 116, and a bus 118. Further, computing device 104 is shown including an I/O device/resource 120 and a storage system 122. As is known in the art, in general, processor 114 executes computer program code, such as control system 14, that is stored in memory 112 and/or storage system 122. While executing computer program code, processor 114 can read and/or write data, such as temperature data 142 (e.g., obtained from temperature sensors T), pressure data 144 (e.g., obtained from one or more pressure sensors) to/from memory 112, storage system 122, and/or I/O interface 116. Bus 118 provides a communications link between each of the components in computing device 104. I/O device 120 can comprise any device that enables a user to interact with computing device 104 or any device that enables computing device 104 to communicate with one or more other computing devices. Input/output devices (including but not limited to keyboards, displays, pointing devices, etc.) can be coupled to the system either directly or through intervening I/O controllers.

As shown in FIG. 2, environment 100 may optionally include the turbine compressors 2 operably connected to the control system 14 (e.g., via the computing device 104), where the computing device 104 and turbine compressors 2 are connected via any type of conventional network, for example, an industrial / home / IP / serial network. The turbine compressors 2 can be connected to the control system 14 (via computing device 104) via conventional means (e.g., via wireless or hard-wired means).

In any event, computing device 104 can comprise any general purpose computing article of manufacture capable of executing computer program code installed by a user (e.g., a personal computer, server, handheld device, etc.). However, it is understood that computing device 104 and control system 14 are only representative of various possible equivalent computing devices that may perform the various process steps of the disclosure. To this extent, in other embodiments, computing device 104 can comprise any specific purpose computing article of manufacture comprising hardware and/or computer program code for performing specific functions, any computing article of manufacture that comprises a combination of specific purpose and general purpose hardware/software, or the like. In each case, the program code and hardware can be created using standard programming and engineering techniques, respectively.

Similarly, computer infrastructure 102 is only illustrative of various types of computer infrastructures for implementing the disclosure. For example, in one embodiment, computer infrastructure 102 comprises two or more computing devices (e.g., a server cluster) that communicate over any type of wired and/or wireless communications link, such as a network, a shared memory, or the like, to perform the various process steps of the disclosure. When the communications link comprises a network, the network can comprise any combination of one or more types of networks (e.g., the Internet, a wide area network, a local area network, a virtual private network, etc.). Network adapters may also be coupled to the system to enable the data processing system to become coupled to other data processing systems or remote printers or storage devices through intervening private or public networks. Modems, cable modem and Ethernet cards are just a few of the currently available types of network adapters. Regardless, communications between the computing devices may utilize any combination of various types of transmission techniques.

As mentioned herein, control system 14 has the technical effect of enabling computing infrastructure 102 to perform, among other things, the air processing functions described herein. It is understood that some of the various components shown in FIG. 2 can be implemented independently, combined, and/or stored in memory for one or more separate computing devices that are included in computer infrastructure 102. Further, it is understood that some of the components and/or functionality may not be implemented, or additional schemas and/or functionality may be included as part of environment 100.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. It is further understood that the terms "front" and "back" are not intended to be limiting and are intended to be interchangeable where appropriate.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. An air processing system (4) comprising:
an inlet manifold (5) adapted to receive compressor discharge air from a plurality of turbine compressors (2);
an air processing system (4) fluidly connected with the inlet manifold (5), the air processing system (4) adapted to process the compressor discharge air to provide a processed working fluid;
an outlet manifold (25) adapted to provide the processed working fluid to a plurality of turbine inlet filtration systems; and
a control system (14) operably connected to the inlet manifold (5), the air processing system (4) and the outlet manifold (25), the control system (14) configured to control flow of the compressor discharge air from the plurality of turbine compressors (2) to the inlet manifold (5).

2. The air processing system of claim 1, further comprising a set of control valves (7) operably connected with the inlet manifold (5) and the plurality of turbine compressors (2), wherein the control system (14) controls the flow of the compressor discharge air from the plurality of turbine compressors (2) by actuating at least one of the set of control valves (7).

3. The air processing system of claim 1 or 2, the inlet manifold (5) having a plurality of ports (9) each corresponding with each of the plurality of turbine compressors (2).

4. The air processing system of any of claims 1 to 3, wherein the air processing system (4) includes:
a cooling system (6) adapted to cool the compressor discharge air to produce cooled compressor discharge air;
a filtering system (16) adapted to filter the cooled compressor discharge air to produce filtered, cooled compressor discharge air; and
a drying system (22) adapted to dry the filtered, cooled compressor discharge air to produce dried, filtered, cooled compressor discharge air.

5. The air processing system of any of claims 1 to 4, the control system (14) further configured to control flow of the compressor discharge air through the air processing system (4).

6. The air processing system of any preceding claim, wherein the inlet manifold (5) is adapted to receive the compressor discharge air from up to four distinct turbine compressors (2).

7. The air processing system of any preceding claim, further comprising at least one temperature sensor adapted to determine at least one of a temperature of the compressor discharge air or a temperature of the processed working fluid.

8. The air processing system of claim 7, wherein the at least one temperature sensor is operably connected to the cooling system (6) and is further adapted to determine the temperature of the cooled compressor discharge air.

9. The air processing system of any of claims 4 to 8, the cooling system (6) including a heat exchanger (8) having a variable frequency drive.

10. The air processing system of claim 9, wherein the control system (14) is configured to modify a frequency of the variable frequency drive in response to the determined temperature of the processed working fluid exceeding a predetermined threshold.

11. A system comprising:
a plurality of turbine compressors (2); and
an air processing system (4) operably connected to the plurality of turbine compressors (2), the air processing system (4) as recited in any of claims 1 to 10.
